(19)

Europäisches
Patentamt
European
Patent Office
Office européen
des brevets

(11) **EP 2 554 687 A1**

(12) **EUROPEAN PATENT APPLICATION**
published in accordance with Art. 153(4) EPC

(43) Date of publication:
**06.02.2013 Bulletin 2013/06**

(21) Application number: **11759228.7**

(22) Date of filing: **07.03.2011**

(51) Int Cl.:
*C21D 9/48* (2006.01)   *C22C 38/14* (2006.01)
*C22C 38/38* (2006.01)

(86) International application number:
**PCT/JP2011/055858**

(87) International publication number:
**WO 2011/118421 (29.09.2011 Gazette 2011/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2010 JP 2010072268**

(71) Applicant: **JFE Steel Corporation
Tokyo 100-0011 (JP)**

(72) Inventors:
• **OKUDA, Kaneharu
  Tokyo 100-0011 (JP)**
• **TANAKA, Yasushi
  Tokyo 100-0011 (JP)**

(74) Representative: **Grünecker, Kinkeldey,
Stockmair & Schwanhäusser
Leopoldstrasse 4
80802 München (DE)**

(54) **METHOD FOR PRODUCING HIGH-STRENGTH STEEL PLATE HAVING SUPERIOR DEEP
DRAWING CHARACTERISTICS**

(57)    Provided is a high-strength steel sheet having excellent deep drawability with a tensile strength of 390 to 700 MPa and an r-value of 1.1 or more in the orientation in which the r-value is lowest. A steel slab formed of a composition containing, by mass, 0.0005% to 0.040% of C, 1.5% or less of Si, 0.5% to 3.0% of Mn, 0.005% to 0.1% of P, 0.01% or less of S, 0.005% to 0.5% of Al, 0.005% or less of N, and one or more of 0.5% or less of Nb, 0.5% or less of Ti, and 0.5% or less of V is subjected to finish rolling by hot rolling at a finish rolling delivery temperature of 800°C or higher, coiling at 550°C to 720°C, and cooling to form a hot-rolled steel sheet. The hot-rolled steel sheet is pickled and cold-rolled to a rolling reduction of 50% to 85% to form a cold-rolled steel sheet. The cold-rolled steel sheet is annealed at an annealing temperature of 760°C to 950°C. In this step, a strain of 0.1% to 2.0% is applied in the temperature range of 700°C to the annealing temperature.

EP 2 554 687 A1

**Description**

[Technical Field]

The present invention relates to methods for manufacturing high-strength steel sheets having excellent deep drawability with tensile strengths of 390 to 700 MPa and useful in applications such as automotive steel sheets.

[Background Art]

Recently, there has been a need for improvements in the fuel efficiency of automobiles to reduce $CO_2$ emissions for global environmental conservation. In addition, there has been a need for improvements in the safety of automotive body, particularly crashworthiness, to ensure passenger safety in collision. Proactive efforts have thus been made to reduce the weight of automotive body for improved fuel efficiency and to reinforce automotive body for improved crashworthiness.

To simultaneously achieve the weight reduction and reinforcement of automotive body, it is said to be effective to reduce the weight by increasing the strength of materials for components and reducing the thickness thereof without impairing the stiffness thereof. Recently, high-strength steel sheets have been extensively used for automotive components.

Because the use of steel sheets having higher strengths is more effective for weight reduction, steel sheets having tensile strengths (TS) of 390 MPa or more have increasingly been used in the automotive industry as, for example, materials for inner and outer panels.

At the same time, automotive steel sheets are required to have excellent press formability because most automotive components made of steel sheets are formed by press forming. High-strength steel sheets, however, are inferior in formability, particularly deep drawability, to conventional mild steel sheets. To reduce the weight of automobiles, there is a growing need for high-strength steel sheets having a TS of 390 MPa or more and good deep drawability. The deep drawability is evaluated based on the Lankford value (hereinafter "r-value"), which shows planer anisotropy and needs to be 1.1 or more in the orientation in which the r-value is lowest.

One technique for achieving high strength and high r-value is to add solid-solution strengthening elements, such as Si, Mn, and P, to an ultralow-carbon steel sheet based on an interstitial-free (IF) steel containing Ti and Nb in amounts sufficient to fix solute carbon and nitrogen, as disclosed in, for example, Patent Literature 1.

Patent Literature 1 discloses a technique related to a high-strength cold-rolled steel sheet, having excellent formability with non-aging properties, that contains 0.002% to 0.015% of C, C% × 3 to (C% × 8 + 0.020%) of Nb, 1.2% or less of Si, 0.04% to 0.8% of Mn, and 0.03% to 0.10% of P and that has a TS of 35 to 45 kgf/mm² (340 to 440 MPa).

The technique of using an ultralow-carbon steel, however, involves large amounts of alloying elements added to manufacture a steel sheet having a TS of 440 MPa or more, although adding large amounts of solid solution strengthening elements decreases the r-value, which causes a problem in that the r-value decreases as the strength is increased.

One method for increasing the strength of a steel sheet other than solid-solution strengthening, as noted above, is microstructure strengthening. For example, dual-phase (DP) steel sheets, which have a dual-phase microstructure composed of soft ferrite and hard martensite phases, are available. DP steel sheets generally have advantages such as good elongation with an excellent strength-elongation (TS-EL) balance and a low yield ratio, which means that the yield stress is low relative to the tensile strength, thus providing excellent shape fixability after press forming, although they have a low r-value and poor deep drawability. This is said to result from the presence of martensite that does not contribute to the r-value because of the crystal orientation thereof and from inhibited formation of a {111} recrystallization texture, which is effective for increasing the r-value, due to solute C, which is essential for formation of martensite.

Attempts to improve the r-value of DP steel sheets include the techniques of Patent Literatures 2 and 3.

The technique of Patent Literature 2 subjects a cold-rolled steel sheet to box annealing at a temperature of the recrystallization temperature to $Ac_3$ transformation point, followed by heating to 700°C to 800°C and quenching and tempering, thereby forming a dual-phase microstructure. This method, however, is disadvantageous in manufacturing costs because continuous annealing is performed for quenching and tempering after box annealing. In addition, box annealing is inferior to continuous annealing in processing time and efficiency.

The technique of Patent Literature 3 subjects a cold-rolled steel sheet first to box annealing to achieve a high r-value, where the temperature falls within the ferrite (α) - austenite (γ) two-phase region, and then to continuous annealing. This technique concentrates Mn in the γ phase during soaking in the α-γ two-phase region in box annealing. The Mn-concentrated phase preferentially turns into a γ phase in the subsequent continuous annealing and allows a dual-phase microstructure to be formed at a cooling rate similar to that of gas jet cooling. This method, however, needs extended box annealing at relatively high temperature for Mn concentration, which results in problems in addition to those discussed for Patent Literature 2, including frequent adhesion between steel sheets, development of temper color, and a shortened life of a furnace inner cover.

**EP 2 554 687 A1**

Patent Literature 4 discloses a method for manufacturing a DP high-strength cold-rolled steel sheet having excellent deep drawability and shape fixability in which a steel containing, by weight, 0.003% to 0.03% of C, 0.2% to 1% of Si, 0.3% to 1.5% of Mn, and 0.02% to 0.2% of Ti (where the atomic concentration ratio (effective Ti)/(C + N) is 0.4 to 0.8) is subjected to hot rolling, cold rolling, and continuous annealing in which the steel sheet is heated to a predetermined temperature and is then quenched. The Examples thereof disclose that a DP cold-rolled steel sheet having a r-value of 1.61 and a TS of 482 MPa can be manufactured by cold-rolling a steel containing 0.012% of C, 0.32% of Si, 0.53% of Mn, 0.03% of P, and 0.051% of Ti, heating the cold-rolled steel sheet to 870°C, which falls within the $\alpha$-$\gamma$ two-phase region, and cooling the steel sheet at an average cooling rate of 100°C/s. This method, however, needs water quenching equipment to achieve a cooling rate as high as 100°C/s, raises the possibility of degradation in the surface treatment properties and surface quality of the water-quenched steel sheet, and has problems with manufacturing equipment and shape.

The technique of Patent Literature 5 is directed to a high-strength steel sheet having excellent deep drawability and a method for manufacturing such a high-strength steel sheet. This technique provides a high-strength steel sheet containing a predetermined amount of C, having an average r-value of 1.3 or more, and having a microstructure containing at least one of bainite, martensite, and austenite in a total amount of 3% to 100%. The method for manufacturing such a steel sheet includes cold-rolling the steel to a rolling reduction of 30% to 95%, annealing the cold-rolled steel sheet to form clusters and precipitates of Al and N, thereby developing a texture and increasing the r-value (annealing for increasing the r-value by heating the steel sheet at an average heating rate of 4°C/hr to 200°C/hr such that the maximum temperature reached is 600°C to 800°C), and performing heat treatment so that the microstructure contains at least one of bainite, martensite, and austenite in a total amount of 3% or more (heat treatment by which the steel sheet is heated to a temperature of $Ac_1$ transformation point to 1,050°C). This method has poor productivity because it needs annealing for achieving a high r-value and heat treatment for developing the microstructure after cold rolling and also needs extended holding, namely, a holding time of more than one hour at the maximum temperature reached, in the annealing step.

Patent Literature 6 discloses a technique for improving the r-value of a DP steel sheet by optimizing the atomic ratio of the C content to the V content of a steel containing, by mass, 0.01% to 0.08% of C and 0.01% to 0.5% of V. This technique precipitates C contained in the steel as V-based carbides to minimize the amount of solute C for improved r-value before recrystallization annealing, dissolves the V-based carbides by heating the steel in the $\alpha$-$\gamma$ two-phase region to concentrate C in the $\gamma$ phase, and forms a secondary phase having an area fraction of martensite of 1% or more in the subsequent cooling step. This method, however, cannot stably provide a high r-value because the addition of V produces a limited effect of improving the r-value due to the low precipitation efficiency of VC in the hot-rolled steel sheet.

Patent Literature 7 controls the atomic ratio of C to V, Ti, and Nb of a steel containing 0.03% to 0.08% by mass of C and, as in Patent Literature 6, concentrates C by heating in the $\alpha$-$\gamma$ two-phase region and forms martensite in the subsequent cooling step to facilitate microstructure strengthening while utilizing solid-solution strengthening, thereby achieving a TS of 780 MPa or more and an average r-value of 1.2 or more. This method, however, has a problem in that the r-value shows significant planar anisotropy and is low in the orientation in which the r-value is lowest.

Patent Literature 8 discloses that a low-carbon steel sheet containing 0.005% by weight or more of C is subjected to recrystallization annealing by continuous annealing, is quenched to the temperature range of 550°C to 300°C, and is bent one to three times within 30 seconds after quenching to provide both workability and aging resistance. Bending is intended to introduce dislocations into the steel sheet to facilitate precipitation of carbides. This method cannot control the texture of the ferrite matrix to achieve a high r-value.

[Citation List]

[Patent Literature]

[PTL 1] Japanese Unexamined Patent Application Publication No. 56-139654
[PTL 2] Japanese Examined Patent Application Publication No. 55-10650
[PTL 3] Japanese Unexamined Patent Application Publication No. 55-100934
[PTL 4] Japanese Examined Patent Application Publication No. 1-35900
[PTL 5] Japanese Unexamined Patent Application Publication No. 2003-64444
[PTL 6] Japanese Unexamined Patent Application Publication No. 2002-226941
[PTL 7] Japanese Unexamined Patent Application Publication No. 2003-193191
[PTL 8] Japanese Unexamined Patent Application Publication No. 11-179427

[Summary of Invention]

[Technical Problem]

An object of the present invention is to solve the problems with the related art and to provide a method for manufacturing a high-strength steel sheet having excellent deep drawability with a tensile strength of 390 to 700 MPa and an r-value of 1.1 or more in the orientation in which the r-value is lowest.

[Solution to Problem]

An intensive study for solving the foregoing problems has led to the finding that applying strain around a soaking temperature to a steel sheet for deep drawing having a controlled solute C content in annealing facilitates development of a texture desirable for deep drawability, thus increasing the r-value in the orientation in which the r-value is lowest. The present invention is based on this finding and is summarized as follows.
[1] A method for manufacturing a high-strength steel sheet having excellent deep drawability includes a hot rolling step of subjecting a steel slab formed of a composition containing, by mass, 0.0005% to 0.040% of C, 1.5% or less of Si, 0.5% to 3.0% of Mn, 0.005% to 0.1% of P, 0.01% or less of S, 0.005% to 0.5% of Al, 0.005% or less of N, and one or more of 0.5% or less of Nb, 0.5% or less of Ti, and 0.5% or less of V to finish rolling by hot rolling at a finish rolling delivery temperature of 800°C or higher, coiling at 550°C to 720°C, and cooling to form a hot-rolled steel sheet; a cold rolling step of pickling and cold-rolling the hot-rolled steel sheet to a rolling reduction of 50% to 85% to form a cold-rolled steel sheet; and an annealing step of annealing the cold-rolled steel sheet at an annealing temperature of 760°C to 950°C, wherein a strain of 0.1% to 2.0% is applied in the temperature range of 700°C to the annealing temperature.

[2] In the method for manufacturing a high-strength steel sheet having excellent deep drawability according to [1], the composition further contains, by mass, one or both of 0.5% or less of Cr and 0.5% or less of Mo.

[3] The method for manufacturing a high-strength steel sheet having excellent deep drawability according to [1] or [2] further includes a galvanizing step.

[Advantageous Effects of Invention]

According to the present invention, a high-strength steel sheet having excellent deep drawability with a tensile strength TS of 390 to 700 MPa and a high r-value, namely, 1.1 or more, in the orientation in which the r-value is lowest can be stably manufactured at low cost.

[Description of Embodiments]

The present invention provides a high r-value by applying strain to a steel containing 0.0005% to 0.040% by mass of C and having the solute C content thereof controlled depending on the contents of Ti, Nb, and V, which are carbonitride-forming elements, and Si, Mn, and P, which are solid-solution strengthening, during a grain growth stage after recrystallization in recrystallization annealing after cold rolling, thus forming (developing) a sharp {111}//ND (ND: normal direction) texture desirable for deep drawability.
While the reason behind this is not fully understood, one possible reason is as follows.
It has been believed that minimizing the solute C content of a soft steel sheet before cold rolling and recrystallization and refining the microstructure of a hot-rolled steel sheet are effective means for achieving a high r-value, that is, for developing a {111} recrystallization texture.
As is known in the art, Nb has a recrystallization-retarding effect and allows the microstructure of a hot-rolled steel sheet to be refined by appropriately controlling the finish temperature in hot rolling. In addition, Nb and Ti are highly capable of forming carbides in steel. The present invention reduces the solute C content before cold rolling and recrystallization by controlling the finish temperature in hot rolling within an appropriate range immediately above the $Ar_3$ transformation point to refine the microstructure of a hot-rolled steel sheet, and appropriately controlling the temperature for coiling after hot rolling to precipitate NbC, TiC, and VC in the hot-rolled steel sheet.

The present invention controls the amount of C that does not precipitate as NbC, TiC, or VC to ensure a certain average r-value by recrystallization annealing after cold rolling. In addition, strain is applied during a grain growth stage after ferrite recrystallization. This will result in selective straining to crystal grains having orientations undesirable for deep drawability (r-value), which will disappear during the grain growth stage, thus forming a sharp {111}//ND texture desirable for deep drawability. In addition, an annealing temperature (soaking temperature) of the $Ac_1$ transformation point or higher will cause the ferrite grains having strain applied thereto to be selectively transformed to austenite, which in turn is transformed to ferrite during cooling, when a sharp ferrite texture will form in a crystal orientation desirable for deep drawability.

The present invention will now be described in detail.

The reasons for the specific composition of the steel sheet of the present invention will be described first. The contents of the elements herein are expressed as "mass percent" unless otherwise indicated.

C: 0.0005% to 0.040%

C is an element important for the present invention along with Nb, Ti, and V, described later. C is also effective for increasing the strength of the steel. To form a dual-phase microstructure, 0.01% or more of C needs to be added. The upper limit is set to 0.040% because an excessive C content is undesirable for achieving a high r-value. More preferably, the C content is 0.030% or less. While a lower C content is preferred, the lower limit is set to 0.0005% in view of refining technology.

Si: 1.5% or less

Si promotes ferrite transformation and increases the C content of untransformed austenite to facilitate formation of a dual-phase microstructure of ferrite and martensite and also has a solid-solution strengthening effect. To achieve the above effects, the Si content is preferably 0.2% or more, more preferably 0.35% or more. A Si content of more than 1.5%, however, would cause red scale in hot rolling, thus degrading surface appearance. Accordingly, the Si content is 1.5% or less. Preferably, the Si content is 1.0% or less because uneven coating would otherwise occur due to decreased coating wettability in hot-dip galvanizing, thus degrading coating quality.

Mn: 0.5% to 3.0%

Mn is an element effective for increasing the strength and preventing hot cracking due to S. In view of this, the Mn content needs to be 0.5% or more. More preferably, the Mn content is 1.0% or more. The Mn content is limited to 3.0% because adding an excessive amount of Mn decreases the r-value and weldability.

P: 0.005% to 0.1%

P has a solid-solution strengthening effect. A P content of less than 0.005%, however, is insufficient to provide this effect and raises dephosphorization cost in a steelmaking process. Accordingly, the P content is 0.005% or more. More preferably, the P content is 0.01% or more. Adding an excessive amount of P, namely, more than 0.1%, causes segregation of P at grain boundaries, thus degrading secondary work embrittlement resistance and weldability. In addition, in alloying after hot-dip galvanizing for manufacture of a galvanized steel sheet, excess P inhibits diffusion of iron from the steel sheet into the coated layer through the interface between the coated layer and the steel sheet, thus degrading alloying properties. This would require alloying at elevated temperature, and the resulting coated layer would be undesirable because of its susceptibility to exfoliation such as powdering and chipping. Accordingly, the P content is limited to 0.1%.

S: 0.01% or less

The S content is preferably minimized because it causes hot cracking and also degrades the properties of the steel sheet as inclusions in the steel. The S content is 0.01% or less because the range of up to 0.01% is allowable.

Al: 0.005% to 0.5%

The Al content is 0.005% or more because it is useful as a deoxidizing element for the steel and also functions to improve room-temperature aging resistance by fixing solute N. The Al content, however, is limited to 0.5% because adding more than 0.5% of Al involves a higher alloying cost and induces more surface defects.

N: 0.005% or less

The N content is preferably minimized because an excessive amount of N degrades the room-temperature aging resistance and requires large amounts of Al and Ti to be added, and is limited to 0.005%.

The steel further contains one or more of Nb, Ti, and V, described below.

Nb: 0.5% or less

Nb functions to refine the structure of a hot-rolled steel sheet and to precipitate and fix C as NbC in the hot-rolled steel sheet, thus contributing to a higher r-value. In view of this, the Nb content is preferably 0.02% or more. The Nb content, however, is limited to 0.5% because adding an excessive amount of Nb increases the cost and requires a high load in hot rolling.

V: 0.5% or less

V, which has a similar effect to Nb, functions to refine the structure of a hot-rolled steel sheet and to precipitate and fix C as carbides in the hot-rolled steel sheet, thus contributing to a higher r-value. The V content, however, is limited to 0.5% because adding an excessive amount of V increases the cost and requires a high load in hot rolling.

Ti: 0.5% or less

Ti, which has a similar effect to Nb, functions to refine the structure of a hot-rolled steel sheet and to precipitate and fix C as carbides in the hot-rolled steel sheet, thus contributing to a higher r-value. Ti is also effective in precipitating and fixing solute S and N. To control the anisotropy of the r-value, it is important to effectively utilize Ti as well as Nb. In view of this, the effective Ti content (Ti*), defined below, is preferably 0.01% or more:

$$Ti^* = Ti - 1.5S - 3.4N$$

where Ti, S, and N are the contents (% by mass) of Ti, S, and N.

The Ti content, however, is limited to 0.5% because adding an excessive amount of Ti increases the cost and requires a high load in hot rolling. The foregoing is the basic constituents of the present invention.

While the balance other than the foregoing constituents is preferably iron and incidental impurities in the present invention, the steel may further contain one or both of Cr and Mo, described below.

Cr: 0.5% or less

Cr contributes to a higher r-value by precipitating and fixing C in the hot rolling step. To achieve this effect, the Cr content is preferably 0.1% or more. If Cr is added, however, the content thereof is limited to 0.5% because adding an excessive amount of Cr does not provide any greater effect and results in a higher alloying cost.

Mo: 0.5% or less

Mo contributes to a higher r-value by precipitating and fixing C in the hot rolling step. To achieve this effect, the Mo content is preferably 0.05% or more. If Mo is added, however, the content thereof is limited to 0.5% because adding an excessive amount of Mo does not provide any greater effect and results in a higher alloying cost.

The steel may further contain other elements such as B, Ca, and REM within a normal steel composition range.

B, for example, is an element that functions to improve the hardenability of the steel and can be optionally contained. The B content, however, is preferably 0.003% or less because a B content of more than 0.003% does not provide any greater effect.

Ca and REM function to control the morphology of sulfide inclusions and thereby prevent degradation in the properties of the steel sheet. The total content of one or both of Ca and REM is preferably 0.01% or less because a total content of more than 0.01% does not provide any greater effect.

Other examples of incidental impurities include Sb, Sn, Zn, and Co. The allowable Sb content is 0.01% or less. The allowable Sn content is 0.1% or less. The allowable Zn content is 0.01% or less. The allowable Co content is 0.1% or less.

Next, a preferred method for manufacturing the steel sheet of the present invention will be described.

The steel having the foregoing composition is melted and cast into a slab. The steel slab is preferably manufactured by continuous casting to prevent macrosegregation of constituents, although it may instead be manufactured by ingot making or thin slab casting. Also applicable are conventional processes in which steel slabs are manufactured, are cooled to room temperature, and are heated again; and energy-saving processes such as direct rolling in which hot steel slabs are directly charged into a heating furnace without cooling and are hot-rolled and direct rolling in which steel slabs are hot-rolled immediately after slight heat retaining, namely, hot direct rolling.

A lower slab heating temperature is preferred to form coarse precipitates and thereby develop a {111} recrystallization texture for improved deep drawability. The slab heating temperature, however, is preferably 1,000°C or higher because a heating temperature of lower than 1,000°C increases the rolling load and therefore increases the risk of causing a problem in hot rolling. The slab heating temperature is preferably limited to 1,300°C because any higher temperature results in increased scale loss due to increased oxidation.

Hot Rolling Step

The steel slab heated under the foregoing conditions is subjected to hot rolling in which the steel sheet is rough-rolled and finish-rolled. The steel slab is rough-rolled into a sheet bar. The conditions of rough rolling need not be specified, and it may be performed as usual. It should also be understood that the use of a sheet bar heater for heating the sheet bar is an effective way to lower the slab heating temperature and to prevent a problem in hot rolling.

The sheet bar is then finish-rolled into a hot-rolled steel sheet. The finish rolling delivery temperature (FT) is 800°C or higher. This is intended to form a fine hot-rolled steel sheet microstructure, which provides excellent deep drawability after cold rolling and recrystallization annealing. An FT of lower than 800°C results in a worked microstructure, which inhibits development of a {111} texture after cold rolling and annealing and also increases the rolling load in hot rolling. An FT of higher than 980°C results in a coarse microstructure, which inhibits formation and development of a {111} recrystallization texture after cold rolling and annealing and therefore makes it impossible to achieve a high r-value. Accordingly, the FT is limited to the range of 800°C or higher and is preferably 980°C or lower.

To reduce the rolling load in hot rolling, lubrication rolling may be performed in part of or the entire finish rolling pass. Lubrication rolling is also effective in forming a uniform sheet shape and homogenizing the material. The friction coefficient in lubrication rolling is preferably in the range of 0.10 to 0.25. Also preferred is a continuous rolling process in which adjacent sheet bars are joined together and are continuously finish-rolled. The use of the continuous rolling process is also preferred in view of operational stability in hot rolling.

The rolled steel sheet is coiled at 550°C to 720°C. This temperature range is suitable for precipitating NbC, TiC, and VC in the hot-rolled steel sheet to reduce the solute C content before cold rolling and recrystallization. A coiling temperature (CT) of higher than 720°C makes it impossible to achieve a high r-value after cold rolling and annealing and is also undesirable for increasing the strength because coarse crystal grains decrease the strength.

Cold Rolling Step

The hot-rolled steel sheet is then subjected to a cold rolling step in which the steel sheet is picked and cold-rolled into a cold-rolled steel sheet. Pickling may be performed under normal conditions. The cold rolling conditions may be any conditions under which a cold-rolled steel sheet of the desired size and shape can be formed, although the rolling reduction in cold rolling is at least 50%. A high rolling reduction is effective for achieving a high r-value. A rolling reduction of less than 50% does not allow a {111} recrystallization texture to be developed, and it is therefore difficult to achieve excellent deep drawability. The rolling reduction, however, is limited to 85% because while a higher rolling reduction within the range of up to 85% contributes to a higher r-value in the present invention, a rolling reduction of higher than 85% does not provide any greater effect and requires a higher load on the rollers used for rolling.

Annealing Step

The cold-rolled steel sheet is then annealed at an annealing temperature of 760°C to 950°C. In this step, a strain of 0.1% to 2.0% is applied to the steel sheet in the temperature range of 700°C to the annealing temperature. The steel sheet needs to be annealed at 760°C or higher to develop a {111} recrystallization texture. An annealing temperature of higher than 950°C noticeably coarsens recrystallized grains and therefore noticeably degrades the properties.

The straining during annealing is an important requirement for the present invention. A strain of 0.1% to 2.0% is applied to the cold-rolled steel sheet in the temperature range of 700°C to the annealing temperature, and the steel sheet is annealed at 760°C to 950°C. At 700°C or higher, the steel sheet is recrystallized and is in the grain growth stage. The straining to the steel sheet during the grain growth stage results in selective straining to crystal grains having orientations, including <100>//ND, undesirable for deep drawability (r-value). The ferrite grains having strain selectively applied thereto will disappear during the grain growth stage, thus forming a sharp {111}//ND texture desirable for deep drawability. In addition, an annealing temperature of the $Ac_1$ transformation point or higher will cause the ferrite grains having strain applied thereto to be selectively transformed to austenite, which in turn is transformed to ferrite during cooling, thus forming a sharp texture. To achieve this effect, a strain of at least 0.1% needs to be applied. Application of a strain of more than 2.0%, however, causes the grains to be rotated and develops the grains in orientations undesirable in terms of the r-value in the rolling direction.

The strain is the elongation in the rolling longitudinal direction. The strain may be applied by any method, although a tensile strain is preferably applied so that it can be selectively applied to crystal grains having orientations undesirable in terms of r-value. Alternatively, the strain may be applied by rolling or bending. For bending deformation, in which the strain differs in the thickness direction, the average bending strain across the thickness from the neutral plane of bending to the outer side preferably falls within the above strain range. For example, if the strain is applied by tensile deformation, the strain can be adjusted by controlling the tension applied to the steel sheet during annealing. If the strain is applied by bending deformation, the strain can be adjusted by controlling the pressure under which rollers are pressed against the surface of the steel sheet during annealing.

The cooling rate after annealing is not specified, although the steel sheet needs to be cooled at an average cooling rate of 5°C/s to 15°C/s in the temperature range of the annealing temperature to 500°C in order to form a secondary phase having an area fraction of martensite of 1% or more and achieve a TS of 540 MPa or more. An average cooling rate of lower than 5°C/s in the temperature range inhibits formation of martensite, thus resulting in an area fraction of martensite of less than 1%. An average cooling rate of higher than 15°C/s may increase the secondary phase fraction and result in an area fraction of ferrite of less than 50%, thus degrading the elongation. Accordingly, the average cooling rate in the temperature range of the annealing temperature to 500°C is preferably 5°C/s to 15°C/s. For cooling below 500°C, the cooling rate is not limited because the preceding cooling stabilizes the γ phase to a certain level. Nevertheless, the steel sheet is preferably cooled to 300°C at an average cooling rate of 5°C/s or higher, and if overaging is performed, the steel sheet is preferably cooled to the overaging temperature at an average cooling rate of 5°C/s or higher. The cooling rate can be controlled by gas jet cooling.

The cold-rolled steel sheet after the annealing step may be subjected to a galvanizing process such as electrogalvanizing or hot-dip galvanizing to form a coated layer on the surface of the steel sheet.

For example, if hot-dip galvanizing is performed as the galvanizing process, the steel sheet may be annealed, cooled, and dipped in a hot-dip galvanizing bath on a continuous hot-dip galvanizing line to form a galvanized layer on the surface of the steel sheet, and may be optionally subjected to alloying to manufacture a galvannealed steel sheet. In this case, the steel sheet removed from the hot-dip galvanizing pot and optionally subjected to alloying is preferably cooled to 300°C at an average cooling rate of 5°C/s or higher.

Alternatively, the steel sheet may be annealed and cooled to room temperature on an annealing line and be subjected to hot-dip galvanizing and optional alloying on a hot-dip galvanizing line.

It should be understood that the coated layer is not limited to pure zinc or zinc alloy coating, and various coated layers, such as aluminum and aluminum alloy coatings, that are applied to the surfaces of steel sheets in the related art can be used.

The annealed cold-rolled steel or coated steel sheet may be subjected to temper rolling or leveling for purposes such as shape correction and surface roughness control. The total elongation in temper rolling or leveling is preferably in the range of 0.2% to 15%. An elongation of less than 0.2% does not achieve the intended purposes such as shape correction and roughness control. An elongation of more than 15% results in a noticeable decrease in ductility. Temper rolling and leveling differ in the manner of processing, although it has been demonstrated that they have little difference in effect. Temper rolling and leveling are also effective after coating.

The steel sheet manufactured by the method of the present invention has a ferrite single-phase microstructure or a dual-phase microstructure having an area fraction of ferrite phase of 50% or more and an area fraction of martensite phase of 1% or more. This ferrite phase results from the development of a {111} recrystallization texture. To ensure good deep drawability, the r-value needs to be high in the orientation in which the r-value is lowest. The method of the present invention provides a r-value of 1.1 or more in the orientation in which the r-value is lowest, namely, in the rolling direction, by controlling the contents of carbide-forming elements, namely, Ti, Nb, and V, and the C content and applying a predetermined strain during the grain growth stage after ferrite recrystallization in annealing. The resulting steel sheet has a tensile strength of 390 to 700 MPa and excellent deep drawability with an r-value of 1.1 or more in the orientation in which the r-value is lowest.

For the steel sheet to have good deep drawability and a tensile strength (TS) of 540 MPa or more, it preferably has a steel microstructure having an area fraction of ferrite phase of 50% or more and an area fraction of martensite phase of 1% or more. An area fraction of ferrite phase of less than 50% results in an r-value of less than 1.1 in the rolling direction, in which the r-value is lowest, and it is therefore difficult to ensure good deep drawability. More preferably, the area fraction of ferrite phase is 70% or more. To utilize the advantages of a dual-phase microstructure, the area fraction of ferrite phase is 99% or less. The ferrite phase refers to polygonal ferrite phase and bainitic ferrite phase, which forms from austenite phase and has high dislocation density.

An area fraction of martensite phase of less than 1% makes it difficult to achieve a good strength-ductility balance. More preferably, the area fraction of martensite phase is 3% or more.

In addition to the ferrite and martensite phases, the microstructure may contain metal phases such as pearlite, bainite, and residual γ phase.

The average r-value is preferably 1.4 or more in view of deep drawability. The method of the present invention provides an average r-value of 1.4 or more by controlling the Ti, Nb, V, and C contents and applying strain during annealing, as noted above.

[EXAMPLES]

Next, examples of the present invention will be described.

Molten steels of the compositions listed in Table 1 were prepared in a converter and were continuously cast into slabs. These steel slabs were heated to 1,250°C and rough-rolled into sheet bars. The sheet bars were then finish-rolled and coiled under the conditions listed in Table 2 to form hot-rolled steel sheets. These hot-rolled steel sheets were pickled and cold-rolled to a rolling reduction of 65% to form cold-rolled steel sheets having a thickness of 1.2 mm. The cold-rolled steel sheets were annealed at the annealing temperatures listed in Table 2 on a continuous annealing line. During annealing, strain was applied under the conditions in Table 2. The strain applied to the steel sheets was controlled by controlling the tensile stress exerted by the tension applied to the steel sheets or the bending stress exerted by roller winding. For tensile stress, the tension was controlled such that the elongation reached a predetermined elongation calculated from the measured thickness while measuring the actual tension with a tensiometer (load cell). For roller pressing, the amount of pressing was controlled such that the thickness strain of the surfaces of the steel sheets during roller pressing reached a predetermined strain. After being soaked at the annealing temperatures in Table 2, the steel sheets were cooled by gas jet cooling. The resulting annealed cold-rolled steel sheets were subjected to temper rolling at an elongation of 0.5%.

Steel Sheet No. 2 was subjected to a cold-rolled steel sheet annealing step on a continuous hot-dip galvanizing line, in-line hot-dip galvanizing (bath temperature: 480°C), and temper rolling at an elongation of 0.5% to form a galvanized steel sheet.

The annealed cold-rolled steel sheets manufactured as above (cold-rolled steel sheets and galvanized steel sheet) were tested for steel sheet microstructure, tensile properties, and r-value. The test procedures were as follows. The test results are listed in Table 2.

(1) Tensile Properties

JIS No. 5 tensile test pieces were cut from the resulting annealed cold-rolled steel sheets in a direction 90° from the rolling direction (C direction) and were subjected to a tensile test at a cross head speed of 10 mm/min in accordance with JIS Z 2241 to determine the yield point (YP), the tensile strength (TS), and the elongation (EL).

(2) r-Value

JIS No. 5 tensile test pieces were cut from the resulting annealed cold-rolled steel sheets in the rolling direction (L direction), a direction 45° from the rolling direction (D direction), and a direction 90° from the rolling direction (C direction). The width and thickness strains of the test pieces under a uniaxial tensile strain of 10% were determined, and the average r-value (average plastic strain ratio) was determined as the r-value in accordance with JIS Z 2254. In Table 2, r min denotes the lowest r-value, which is the r-value in the rolling direction.

(3) Steel Sheet Microstructure

The microstructures of the steel sheets were corroded with 3% nital, and images thereof were captured in three fields of view at a magnification of 1,000X under a scanning electron microscope and were analyzed to measure the ferrite fraction (area fraction). The phases other than ferrite were identified by observing them at a magnification of 5,000X, and the martensite fraction (area fraction) was determined by image processing in three fields of view.

[Table 1]

| Steel | C | Si | Mn | P | S | Al | Nb | Ti | N | V | Cr | Mo | Remarks |
|---|---|---|---|---|---|---|---|---|---|---|---|---|---|
| 1 | 0.0261 | 0.51 | 1.97 | 0.055 | 0.0022 | 0.038 | 0.086 | 0.024 | 0.0010 | 0.002 | tr | tr | Inventive example |
| 2 | 0.0249 | 1.00 | 2.01 | 0.055 | 0.0021 | 0.034 | 0.087 | 0.023 | 0.0024 | 0.002 | tr | tr | Inventive example |
| 3 | 0.0258 | 0.52 | 2.05 | 0.076 | 0.0020 | 0.036 | 0.087 | 0.024 | 0.0030 | 0.001 | 0.42 | tr | Inventive example |
| 4 | 0.0268 | 0.77 | 2.03 | 0.076 | 0.0020 | 0.037 | 0.080 | 0.024 | 0.0032 | 0.002 | 0.21 | 0.15 | Inventive example |
| 5 | 0.0456 | 0.51 | 2.02 | 0.052 | 0.0024 | 0.036 | 0.085 | 0.023 | 0.0030 | 0.002 | 0.40 | tr | Comparative example |
| 6 | 0.0282 | 0.51 | 3.20 | 0.053 | 0.0021 | 0.031 | 0.086 | 0.022 | 0.0031 | 0.002 | 0.82 | tr | Comparative example |
| 7 | 0.0012 | 0.65 | 1.51 | 0.050 | 0.0035 | 0.032 | tr | 0.036 | 0.0021 | tr | tr | tr | Inventive example |
| 8 | 0.0016 | 0.45 | 1.75 | 0.037 | 0.0024 | 0.045 | 0.045 | tr | 0.0018 | tr | tr | tr | Inventive example |
| 9 | 0.0021 | 0.22 | 1.25 | 0.025 | 0.0035 | 0.035 | 0.012 | 0.044 | 0.0025 | tr | 0.50 | tr | Inventive example |
| 10 | 0.0018 | 0.73 | 1.52 | 0.061 | 0.0042 | 0.036 | 0.02 | 0.035 | 0.0023 | 0.042 | tr | 0.15 | Inventive example |
| 11 | 0.0066 | 0.11 | 1.30 | 0.062 | 0.0044 | 0.089 | 0.034 | 0.018 | 0.0024 | tr | tr | tr | Inventive example |

[Table 2]

| No | Steel | FT (°C) | CT (°C) | Annealing temperature (°C) | Holding time (s) | Strain application temperature (°C) | Method for applying strain | Strain (%) | Average cooling rate (°C/s) | Area fraction of ferrite (%) | Area fraction of martensite (%) | Others | YP (MPa) | TS (MPa) | EL (%) | r-value (average r-value) | r min | Remarks |
|---|---|---|---|---|---|---|---|---|---|---|---|---|---|---|---|---|---|---|
| 1 | 1 | 880 | 620 | 860 | 30 | - | None | None | 12 | 92 | 4 | B,θ | 405 | 603 | 30.5 | 1.3 | 0.9 | Comparative example |
| 2 | 1 | 880 | 630 | 860 | 30 | 800 | Tensile | 0.5 | 12 | 92 | 5 | B,θ | 406 | 605 | 30.1 | 1.4 | 1.1 | Inventive example |
| 3 | 1 | 880 | 640 | 860 | 30 | 800 | Tensile | 1.0 | 12 | 92 | 4 | B,θ | 406 | 607 | 30.0 | 1.5 | 1.2 | Inventive example |
| 4 | 1 | 880 | 650 | 860 | 30 | 800 | Tensile | 3.0 | 12 | 92 | 4 | B,θ | 412 | 621 | 27.2 | 1.3 | 1.0 | Comparative example |
| 5 | 1 | 880 | 650 | 860 | 30 | 800 | Bending | 1.0 | 12 | 92 | 4 | B,θ | 406 | 603 | 30.2 | 1.4 | 1.1 | Inventive example |
| 6 | 1 | 880 | 500 | 860 | 30 | 800 | Tensile | 1.0 | 12 | 91 | 5 | B,θ | 421 | 612 | 28.0 | 1.2 | 0.8 | Comparative example |
| 7 | 1 | 880 | 770 | 860 | 30 | 800 | Tensile | 1.0 | 12 | 94 | 3 | B,θ | 395 | 583 | 29.5 | 1.3 | 1.0 | Comparative example |
| 8 | 1 | 880 | 650 | 780 | 30 | 680 | Tensile | 1.0 | 12 | 98 | 1 | B,θ | 455 | 666 | 26.1 | 1.1 | 0.8 | Comparative example |
| 9 | 2 | 880 | 600 | 860 | 30 | 800 | Tensile | 1.5 | 12 | 92 | 4 | B,θ | 425 | 646 | 28.5 | 1.5 | 1.2 | Inventive example |
| 10 | 3 | 880 | 600 | 860 | 30 | 800 | Tensile | 1.5 | 12 | 91 | 5 | B,θ | 430 | 663 | 27.4 | 1.4 | 1.1 | Inventive example |
| 11 | 4 | 880 | 600 | 860 | 30 | 800 | Tensile | 1.5 | 12 | 92 | 5 | B,θ | 435 | 698 | 26.3 | 1.4 | 1.1 | Inventive example |
| 12 | 5 | 880 | 650 | 860 | 30 | 800 | Tensile | 1.5 | 12 | 82 | 10 | B | 400 | 751 | 22.5 | 1.0 | 0.9 | Comparative example |
| 13 | 6 | 880 | 650 | 860 | 30 | 800 | Tensile | 1.5 | 12 | 95 | 0 | B | 425 | 706 | 23.3 | 1.1 | 1.0 | Comparative example |
| 14 | 7 | 900 | 650 | 830 | 30 | 780 | Tensile | 1.5 | 12 | 100 | 0 | - | 260 | 410 | 38.8 | 1.8 | 1.4 | Inventive example |
| 15 | 8 | 900 | 650 | 830 | 30 | 780 | Tensile | 1.5 | 12 | 100 | 0 | - | 256 | 410 | 39.6 | 1.9 | 1.3 | Inventive example |
| 16 | 9 | 900 | 650 | 830 | 30 | 780 | Tensile | 1.5 | 12 | 100 | 0 | - | 248 | 391 | 39.6 | 1.8 | 1.5 | Inventive example |
| 17 | 10 | 890 | 650 | 830 | 30 | 780 | Tensile | 1.5 | 12 | 100 | 0 | - | 295 | 454 | 35.5 | 1.7 | 1.3 | Inventive example |
| 18 | 11 | 900 | 580 | 800 | 30 | 770 | Tensile | 1.5 | 12 | 100 | 0 | - | 232 | 407 | 39.5 | 1.8 | 1.4 | Inventive example |
| 19 | 2 | 880 | 600 | 860 | 30 | - | None | None | 12 | 93 | 4 | B,θ | 430 | 640 | 28.7 | 1.4 | 0.8 | Comparative example |
| 20 | 3 | 880 | 600 | 860 | 30 | - | None | None | 12 | 92 | 5 | B,θ | 432 | 658 | 27.5 | 1.4 | 0.9 | Comparative example |
| 21 | 4 | 880 | 600 | 860 | 30 | - | None | None | 12 | 92 | 5 | B,θ | 438 | 693 | 26.6 | 1.3 | 0.8 | Comparative example |
| 22 | 9 | 900 | 650 | 830 | 30 | - | None | None | 12 | 100 | 0 | - | 250 | 387 | 39.9 | 1.7 | 1.0 | Comparative example |
| 23 | 10 | 900 | 650 | 830 | 30 | - | None | None | 12 | 100 | 0 | - | 300 | 451 | 35.6 | 1.6 | 1.0 | Comparative example |

B: Bainite, θ: Cementite (or pearlite)

As shown in Table 2, all the Inventive Examples had a TS of 390 to 700 MPa, an r-value in the rolling direction (r min) of 1.1 or more, and an average r-value of 1.4 or more. In contrast, the Comparative Examples, manufactured under conditions beyond the scope of the present invention, did not satisfy at least one of the condition that the TS is 390 to 700 MPa and the condition that the r-value in the rolling direction is 1.1 or more.

[Industrial Applicability]

According to the present invention, a high-strength steel sheet having a tensile strength of 390 to 700 MPa and a high r-value in the rolling direction, namely, 1.1 or more, can be stably manufactured at low cost by continuous annealing. For example, if the high-strength steel sheet of the present invention is applied to automotive components, it strengthens portions difficult to form by press forming, thus contributing to an improvement in the crashworthiness of automotive body and a weight reduction. In addition to automotive components, the high-strength steel sheet of the present invention is applicable to household electric appliance components and piping materials.

**Claims**

1. A method for manufacturing a high-strength steel sheet having excellent deep drawability, comprising a hot rolling step of subjecting a steel slab comprising a composition containing, by mass, 0.0005% to 0.040% of C, 1.5% or less of Si, 0.5% to 3.0% of Mn, 0.005% to 0.1% of P, 0.01% or less of S, 0.005% to 0.5% of Al, 0.005% or less of N, and one or more of 0.5% or less of Nb, 0.5% or less of Ti, and 0.5% or less of V to finish rolling by hot roiling at a finish rolling delivery temperature of 800°C or higher, coiling at 550°C to 720°C, and cooling to form a hot-rolled steel sheet; a cold rolling step of pickling and cold-rolling the hot-rolled steel sheet to a rolling reduction of 50% to 85% to form a cold-rolled steel sheet; and an annealing step of annealing the cold-rolled steel sheet at an annealing temperature of 760°C to 950°C, wherein a strain of 0.1% to 2.0% is applied in the temperature range of 700°C to the annealing temperature.

2. The method for manufacturing a high-strength steel sheet having excellent deep drawability according to claim 1, wherein the composition further contains, by mass, one or both of 0.5% or less of Cr and 0.5% or less of Mo.

3. The method for manufacturing a high-strength steel sheet having excellent deep drawability according to claim 1 or 2, further comprising a galvanizing step.

## INTERNATIONAL SEARCH REPORT

| | International application No. |
|---|---|
| | PCT/JP2011/055858 |

**A. CLASSIFICATION OF SUBJECT MATTER**
*C21D9/48*(2006.01)i, *C22C38/14*(2006.01)i, *C22C38/38*(2006.01)i

According to International Patent Classification (IPC) or to both national classification and IPC

**B. FIELDS SEARCHED**

Minimum documentation searched (classification system followed by classification symbols)
C21D9/46-9/48, C21D8/00-8/04, C22C38/00-38/60

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-179922 A (Sumitomo Metal Industries, Ltd.),<br>28 June 1994 (28.06.1994),<br>claims<br>(Family: none) | 1-3 |
| A | JP 6-081045 A (Nippon Steel Corp.),<br>22 March 1994 (22.03.1994),<br>claims<br>(Family: none) | 1-3 |
| A | JP 5-263146 A (Nippon Steel Corp.),<br>12 October 1993 (12.10.1993),<br>claims<br>(Family: none) | 1-3 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 May, 2011 (27.05.11) | 07 June, 2011 (07.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/055858

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-025549 A  (Nippon Steel Corp.),<br>02 February 1993 (02.02.1993),<br>claims<br>(Family: none) | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56139654 A
- JP 55010650 A
- JP 55100934 A
- JP 1035900 A
- JP 2003064444 A
- JP 2002226941 A
- JP 2003193191 A
- JP 11179427 A